# EUROPEAN PATENT SPECIFICATION

(11) **EP 0 487 481 B1**
(45) Date of publication and mention of the grant of the patent: **25.08.1993**
(21) Application number: 91850288.1
(22) Date of filing: 21.11.1991
(51) Int. Cl.: F16L 55/033, F16L 55/027

(54) **Absorptive sound attenuator, in particular for air ducts in paper mills**
Absorbierender Schalldämpfer, insbesondere für Luftkanäle von Papierfabriken
Amortisseur absorbant le son, notamment pour conduits d'air dans l'industrie papetière

(30) Priority: 22.11.1990 FI 905780
(43) Date of publication of application: 27.05.1992
(73) Proprietor: VALMET PAPER MACHINERY INC., 00130 Helsinki (FI)
(72) Inventor: Pettersson, Henrik, SF-23100 Mynämäki (FI); Lemetyinen, Markku, SF-20100 Turku (FI); Sjöstrand, Esko, SF-20200 Turku (FI)
(74) Representative: Wallin, Bo-Göran

(56) References cited:
- WO-A-87/03948
- FR-A- 853 854
- FR-A- 2 386 767
- FR-A- 2 526 860

## Description

### Absorptive sound attenuator, in particular for air ducts in paper mills

The invention concerns an absorptive sound attenuator for air-conditioning ducts, according to the precharacterising clause of claim 1 and disclosed in FR-A-85 3 854 or FR-A-2 386 767.

Ever stricter requirements are imposed on suppression of noise in the environment. One important source of noise consists of the intake and exhaust air pipes for ventilation in connection with various industrial plants and other large buildings, through which pity especially the noise of blowers is spread into the environment. The blowers are usually chosen on the basis of the quantity of air produced by them, and attention is frequently not paid to the noise produced by them. The noise produced by the blowers has quite a wide spectrum, which also imposes particular requirements on the noise suppression.

In view of suppression of noise, paper mills are particularly demanding, because the ventilation of the paper machine hall and in particular the elimination of moisture from the drying section of the paper machine require large quantities of air. It is a particular problem in the air-conditioning of a paper machine, e.g. in respect of the exhaust air from the wire part, that the exhaust air contains a large amount of moisture and a certain extent of fibres and various paper fillers, such as kaolin clay. Said solid materials tend to block the perforated plates in an absorptive sound attenuator, and the condensing moisture wets the absorption materials and deteriorates their properties of sound absorption.

The prior-art sound attenuators in general, and the sound attenuators used in paper machine ventilation in particular, have been difficult to maintain, for their absorption material is frequently susceptible of wetting, and the absorption material is difficult to cleanse and to replace. This may have had the consequence that absorptive sound attenuators which have been designed and dimensioned efficient in themselves operate unsatisfactorily, because they are "blocked" as a result of water and/or impurities.

Since the noise produced by blowers has quite a wide spectrum, in the intake and exhaust air ducts connected to the blowers it is frequently necessary to use both absorptive and reactive sound attenuators. Absorptive sound attenuators operate primarily at higher frequencies; the maximum of their attenuation is at a frequency of about 1000 Hz, whereas reactive sound attenuators, which are mainly based on various resonator constructions, operate most efficiently at low frequencies, and their maximum attenuation is, as a rule, tuned in a range of about 100...200 Hz.

One important property of sound attenuators connected to the input or output ducts of blowers is, besides the attenuation of noise, the loss of pressure produced by them.

The object of the present invention is to provide novel solutions for the problems discussed above.

It is a particular object of the invention to provide such an absorptive sound attenuator in particular suitable for air-conditioning of paper machines as can be serviced and cleansed quickly and easily and in which, when necessary, the absorption material can be replaced, but whose construction is, nevertheless, relatively simple.

It is a further object of the invention to provide such an easily serviceable absorptive sound attenuator as operates under demanding conditions, such as in wet, contaminating, hot, and/or dry environments.

A further object of the invention is to provide a sound attenuator that is also capable of operation when the absorption material is wet.

In view of achieving the objectives states above and those that will come out later, the invention has the characterising features of claim 1.

A preferred embodiment of the invention comprises a box part shaped as a rectangular prism, through which the perforated inner tube passes. The space between the box part and the inner tube is filled with pieces of absorption material. The plane side walls of the box part, which are parallel to the air flow, have been arranged as doors, through which the pieces of absorption material as well as absorption plates or membranes, if any, that may be provided in the air duct of the inner tube can be replaced from outside the box part. The absorption material can be washed and replaced after it has been removed from the interior of the box part. In some cases, the absorption material and the various perforated plates can also be washed when they are in their operating positions.

The perforated wall plates of the perforated plate in the inner tube in the sound attenuator and of possible absorption plates, if any, protect the absorption material placed inside said plates. Said perforation is susceptible of being blocked, in particular so in sound attenuators at paper mills because of the fibres and fillers, but by means of the invention it is relatively easy to cleanse said perforations so that the attenuation capacity of the sound attenuator remains good.

In the following, the invention will be described in detail with reference to some exemplifying embodiments of the invention illustrated in the figures in the accompanying drawings, the invention being in no way strictly confined to the details of said embodiments.

Figure 1 is a schematic and axonometric view of a sound attenuator in accordance with the invention and of the openability of its construction.

Figure 2 is a more detailed side view of an embodiment of the sound attenuator in accordance with the invention partly in section.

Figure 3 shows the same as Fig. 2, seen in a contrary direction (axial direction of the flow duct).

Figure 4 shows a detail D4 in Fig. 2.

Figure 5 is a schematic and axonometric view of a second principle of realization of the invention.

Figure 6 is an axial view of a third principle of realization of the invention.

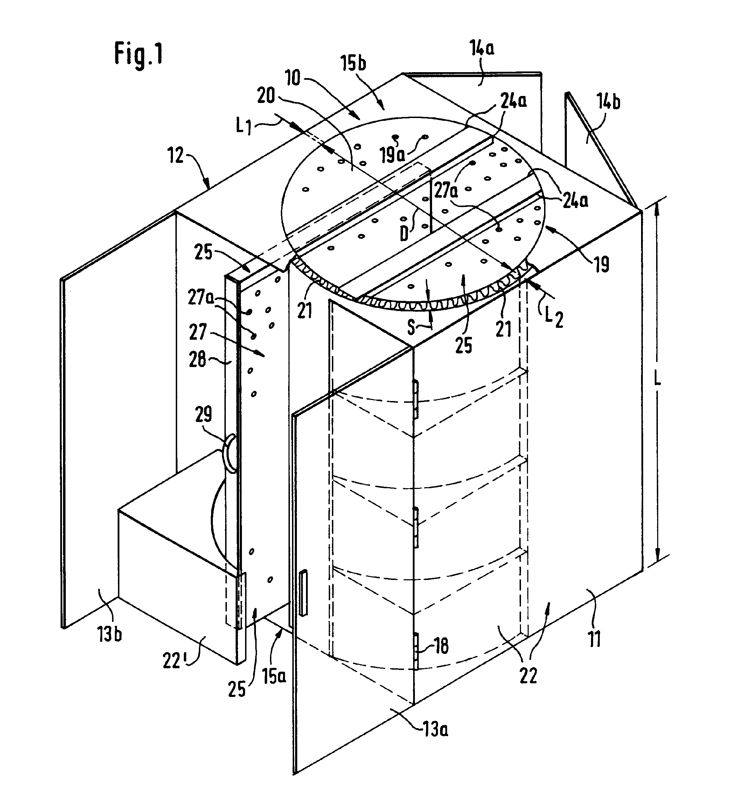

To start with, mainly with reference to Fig. 1, the main principles of the construction and the operation of the absorptive sound attenuator in accordance with the invention will be described.

According to Fig. 1, the absorptive sound attenuator comprises a box part 10 shaped as a rectangular prism, to whose frame construction opposite, stationary vertical walls 11 and 12 have been fixed. The other vertical walls consist of openable pairs of doors 13a,13b and 14a,14b provided with hinges 18. Through the box part, an inner tube 19 of circular section passes, which tube defines the air duct 20 and whose wall plate is provided with through perforations 19a. The inner tube 19 is fixed to the box part by the intermediate of its end walls 15a, 15b.

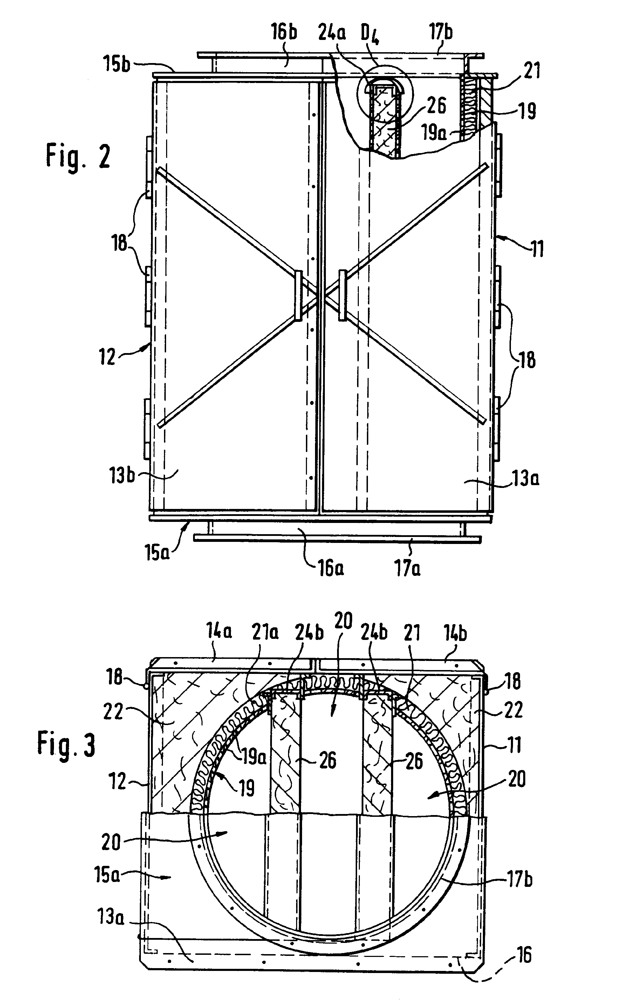

According to Figs. 2 and 3, the end walls 15a, 15b are provided with pipe connectors 16a, 16b, which are provided with flanges 17a, 17b, by whose means the sound attenuator is fixed to the inlet or outlet air pipe (not shown) of the air system so that the inner tube 19 communicates with the air pipes without steps.

In Figs. 1 to 3, outside the inner tube 19 provided with perforations 19a in the box part 10, a ring 21 of absorption material is fitted, which is made, e.g., of mineral wool of permanent shape. The absorption ring 21 may be composed of strips which can be attached to their holders. The thickness S of the ring 21 is, e. g., S = 50 mm.

According to Figs. 1 to 3, the inner tube 19 in the sound attenuator is provided with two absorption plates 25, which are defined by two opposite plane wall plates 27 provided with through perforations 27a. The inner space between the plates 27 is filled with an absorbing material layer 26, such as mineral wool or foam plastic. The absorption plates 25 can be detached best in the way coming out from Fig. 1, for which purpose the absorption plates 25 are mounted by their top and bottom edges in horizontal rails 24a and by one of their vertical edges in vertical rails 24b. One end 28 of the absorption plates 25 is provided with a handle 29, by whose means the absorption plates 25 can be pulled out for cleaning or equivalent.

The space in the box 10 outside the absorption ring 21 is filled with absorption pieces 22, which are arranged and dimensioned in such a way that they can be removed for cleaning and/or replacement through the opposite pairs of doors 13a, 13b and 14a, 14b in the box. According to Fig. 1, absorption pieces 22 are placed in four vertical stacks, four absorption pieces in each stack one on top of the other. The round inner sides of the absorption pieces 22 are placed in tight contact with the outer face of the absorption ring 21. The other sides of the absorption pieces 22 are plane.

In Fig. 1, one of the absorption pieces 22' is shown as partly removed from the box 10. After the pieces 22 have been removed, the absorption plate 25 can also be pulled out of the box 10 if necessary, as is shown in Fig. 1. The absorption plates 25 can be removed in one direction only, i.e. towards their handle 29. After the absorption pieces 22 have been removed from the box 10 and the absorption plates 25 been detached from their horizontal guides and removed out of the box 10, the absorption ring 21 can also be removed if necessary. Hereupon the various absorption parts and the holes 27a in the walls defining them can be cleaned, e. g., by means of water jets. Likewise, the holes 19a in the inner tube 19 in the sound attenuator can be cleaned by means of water jets. After cleaning, the components of the sound attenuator can be assembled into the box 10 in the reversed sequence while replacing any defective parts when necessary.

In some cases, it is also possible to cleanse a sound attenuator without removing the absorption pieces. In such a case, the perforations 19a and 27a,27b are cleansed from inside.

The absorption piece 22 is most appropriately made of such a material, preferably foam plastic, as does not become permanently wet, because water flows away from it. An example of a suitable material is foam plastic, which is not compressed, does not become wet, and has favourable sound attenuation properties.

The axial length L of the box part, i.e. the height in vertical installation, is usually L = 1500...3000 mm in ventilation pipes at paper mills. The diameter D of the inner tube 19 is, as a rule, in the range of D = 500...2000 mm. The diameters of the holes 19a and 27a are, as a rule, in the range of 5... 10 mm, preferably about 8 mm. The sound attenuator is preferably of the vertical design shown in Figs. 1 and 2, but horizontal or diagonal designs are also possible.

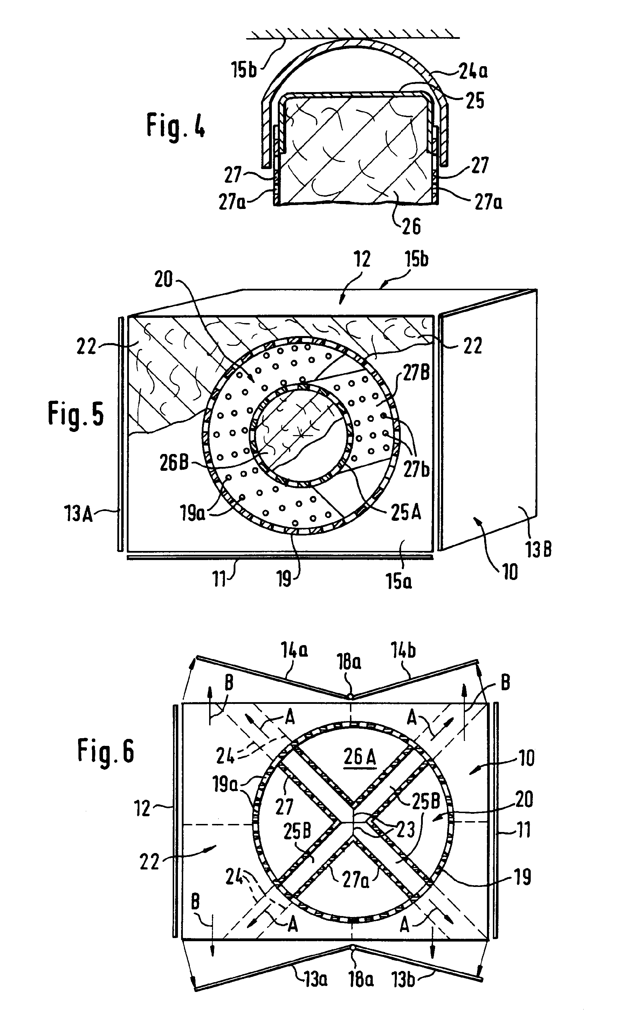

Fig. 5 shows a second variation of the invention, in which, instead of the sound attenuation plates 25, there is a cylindrical central absorption core 25A, which is coaxial with the perforated 19a inner tube 19 fitted in the box part. Between the inner tube 19 and the perforated 27b mantle tube 27B of the core 25A, an air duct 20 shaped as a cylindrical ring remains. Inside the core 25A, there is a piece 26B of absorption material, such as mineral wool or foam plastic. The core 25A is fixed to the box 10 and/or to the inner tube 19 by means arms (not shown). The box 10 of the sound attenuator as shown in Fig. 5 is provided with two fixed opposite walls 11 and 12 as well as with ends 15a and 15b and walls 13A and 13B, which are provided with openable hinged doors, as is shown in Fig. 6, which doors can be opened so that the opposite absorption pieces 22 can be removed. The core 25A can be removed in the direction of its longitudinal axis.

Fig. 6 shows such an embodiment of the invention in which, inside the inner tube 19, there are absorption plates 25B fitted in X-shape, said plates being interconnected at the centre line of the duct 20 by their chamfered outer ends 23. Each of the absorption plates 25B is provided with an inner part 26A of absorption material and with perforated 27a walls 27. The absorption plates 25B can be removed in the direction of the arrows A in their guides 24. Owing to this direction A of removal, the pairs of doors 13a, 13b and 14a, 14b are provided with hinges 18a. The absorption pieces 22 can be removed in the direction of the arrows B after the pairs of doors 13a, 13b and 14a, 14b have been opened completely.

A sound attenuator in accordance with the invention can also be accomplished without absorption plates 25,25A,25B fitted in the inner tube 19. In some applications, in particular when sound attenuation is desired at relatively low frequencies, the absorption plates can be substituted for by corresponding membrane plates that are capable of oscillating.

The dimensioning of a sound attenuator in accordance with the invention, of course, depends on the quantity of air that passes through its duct 20 and on the level and frequency spectrum of the noise to be attenuated. Figs. 1 and 2 show a somewhat asymmetric construction (L₁ > L₂), by whose means the sound attenuation is intensified and the effective frequency range of the attenuator is widened.

## Claims

1. Absorptive sound attenuator for air-conditioning ducts, in particular for intake and/or exhaust air ducts at paper mills, said sound attenuator comprising a box (10), in which interior there is an inner tube (19) provided with through perforations (19a) or equivalent and defining the air duct (20) in its interior, and sound absorption material (21,22) disposed around said inner tube (19), whereby the sound is absorbed in the area of said air duct (20), **characterized** in that, for the purpose of cleaning the sound attenuator and the absorption material (21,22,26) and for the purpose of facilitating the replacement of the latter said box (10) has outer side walls (11,12,13a,13b, 14a,14b, 13A,13B) of which two opposite walls (13a,13b, 14a,14b) have been arranged as openable doors, through which the absorption material (21,22,26) can be removed and replaced from outside the inner tube (19).

2. Sound attenuator as claimed in claim 1, **characterized** in that said box (10) is of rectangular shape and the inner tube (19) of circular shape in the transverse plane perpendicular to the passage of the air flow, and that the planes of the outer walls of the box part (10), including the openable outer walls (13a, 13b; 14a, 14b) are parallel to the air flow.

3. Sound attenuator as claimed in claim 1 or 2, **characterized** in that the axial direction of the inner tube (19) of the sound attenuator is vertical and that the box (10) of the sound attenuator is provided with vertical plane side walls (11,12, 13a,13b, 14a,14b).

4. Sound attenuator as claimed in any of the claims 1 to 3, **characterized** in that around the perforated (19a) inner tube (19) in the sound attenuator there is a ring (21) of absorption material, which is made of mineral wool or of an equivalent absorption material, and that around said absorption ring (21) there are pieces (22) of absorption material, which can be removed through the openable outer doors (13a, 13b, 14a, 14b, 13A, 13B) of the box.

5. Sound attenuator as claimed in any of the claims 1 to 4, **characterized** in that the absorption material that fills the box (10) in the sound attenuator consists of pieces (22) of absorption material, whose number is at least four separate pieces, which have a cylindrical inner face and plane outer faces, said plane faces being placed against the inner faces of the outer walls of the box (10).

6. Sound attenuator as claimed in claim 4 or 5, **characterized** in that said absorption pieces (22) are made of unwetting and non-compressible plastic foam.

7. Sound attenuator as claimed in any of the claims 1 to 6, **characterized** in that in the interior of the inner tube (19) in the sound attenuator, a plate or plates (25,25B) of absorption material are provided, whose plane is preferably parallel to the air flow, and that said plates (25;25B) of absorption material consist of perforated (27a) plate walls (27) and of layers (26;26A) of absorption material placed inside said plate walls.

8. Sound attenuator as claimed in claim 7, **characterized** in that, for the purpose of their cleaning and/or replacement, said absorption plates (25;25B) can be shifted in their guides (24,24a) through the openable outer walls of the box (10) outwards from the box (10) and, correspondingly, back into their operating positions.

9. Sound attenuator as claimed in any of the claims 1 to 6, **characterized** in that, in the interior of the inner tube (19) in the sound attenuator, there is an absorption core (25A), which is provided with a perforated (27b) outer wall (27B), which is preferably coaxial with the inner tube (19) in the sound attenuator, an inner part (26B) of sound-absorption material being placed in the interior of said absorption core (25A) (Fig. 5).

10. Sound attenuator as claimed in any of the claims 1 to 9, **characterized** in that the box part (10) of the sound attenuator is shaped substantially as a rectangular prism and comprises four outer walls of equal lengths (L) in the axial direction and of substantially equal widths, of which outer walls two opposite walls are openable door walls, and that the box part (10) includes plane ends (15a,15b), to which pipe connectors (16a, 16b) have been fixed, which join the inner tube without steps and which are provided with flanges (17a, 17b) for attaching the sound attenuator to the air duct pipes so that the air duct, which preferably is circular, continues through the entire sound attenuator so that its outer wall has substantially no steps.

## Patentansprüche

1. Absorbierender Schalldämpfer für Klimaanlagenkanäle, insbesondere für Einlaß- und/oder Auslaßluftkanäle in Papierfabriken, mit einem Gehäuse (10), in dessen Inneren ein mit einer durchgehenden Perforation (19a) oder dergleichen versehenes inneres Rohr (19) vorgesehen ist, das in seinem Inneren den Luftkanal (20) ausbildet, und mit Schallabsorptionsmaterial (21, 22), welches um das innere Rohr (19) herum angeordnet ist, wodurch der Schall im Bereich des Luftkanals (20) absorbiert wird, **dadurch gekennzeichnet, daß** zum Reinigen des Schalldämpfers und des Absorptionsmaterials (21, 22, 26) und zur Erleichterung des Austauschs von letzterem das Gehäuse (10) äußere Seitenwände (11, 12, 13a, 13b, 14a, 14b, 13A, 13B) hat, von denen zwei gegenüberliegende Wände (13a, 13b, 14a, 14b) als zu öffnende Türen ausgebildet sind, durch die das Absorptionsmaterial (21, 22, 26) von der Außenseite des inneren Rohrs (19) herausgenommen und ausgetauscht werden kann.

2. Schalldämpfer nach Anspruch 1, dadurch gekennzeichnet, daß das Gehäuse (10) eine rechtwinkelige Form und das innere Rohr (19) in der Querebene senkrecht zum Luftstrom eine Kreisform hat, und daß die Ebenen der äußeren Wände des Gehäuseteils (10), die die zu öffnenden äußeren Wände (13a, 13b; 14a, 14b) beinhalten, parallel zum Luftstrom sind.

3. Schalldämpfer nach Anspruch 1 oder 2, dadurch gekennzeichnet, daß die axiale Richtung des inneren Rohrs (19) des Schalldämpfers vertikal ist, und daß das Gehäuse (10) des Schalldämpfers mit vertikalen ebenen Seitenwänden (11, 12, 13a, 13b, 14a, 14b) versehen ist.

4. Schalldämpfer nach einem der Ansprüche 1 bis 3, dadurch gekennzeichnet, daß um das perforierte (19a) innere Rohr (19) im Schalldämpfer herum ein Ring (21) aus Absorptionsmaterial angeordnet ist, der aus Mineralwolle oder einem ähnlichen Absorptionsmaterial hergestellt ist, und daß um den Absorptionsring (22) herum Stücke (22) aus Absorptionsmaterial angeordnet sind, die durch die zu öffnenden äußeren Türen (13a, 13b, 14a, 14b, 13A, 13B) des Gehäuses entfernbar sind.

5. Schalldämpfer nach einem der Ansprüche 1 bis 4, dadurch gekennzeichnet, daß das Absorptionsmaterial, das in dem Schalldämpfer das Gehäuse (10) füllt, aus Absorptionsmaterialstücken (22) besteht, deren Anzahl mindestens vier separate Stücke beträgt, welche zylindrische Innenseiten und ebene Außenseiten haben, wobei die ebenen Seiten entgegen den Innenseiten der äußeren Wände des Gehäuses (10) angeordnet sind.

6. Schalldämpfer nach Anspruch 4 oder 5, dadurch gekennzeichnet, daß die Absorptionsstücke (22) aus unbenetzbarem und inkompressiblem Kunststoffschaum bestehen.

7. Schalldämpfer nach einem der Ansprüche 1 bis 6, dadurch gekennzeichnet, daß in dem Inneren des inneren Rohrs (19) im Schalldämpfer eine Platte oder Platten (25, 25B) aus Absorptionsmaterial vorgesehen sind, deren Ebene vorzugsweise parallel zum Luftstrom ist, und daß die Platten (25; 25B) aus Absorptionsmaterial aus perforierten (27a) Plattenwänden (27) und aus in den Plattenwänden angeordneten Schichten (26, 26A) aus Absorptionsmaterial bestehen.

8. Schalldämpfer nach Anspruch 7, dadurch gekennzeichnet, daß zum Reinigen und/oder Austauschen die Absorptionsplatten (25; 25B) in ihren Führungen (24, 24a) durch die zu öffnenden äußeren Wände des Gehäuses (10) auswärts aus dem Gehäuse (10) und, entsprechend, zurück in ihre Betriebspositionen verschiebbar sind.

9. Schalldämpfer nach einem der Ansprüche 1 bis 6, dadurch gekennzeichnet, daß im Inneren des inneren Rohrs (19) im Schalldämpfer ein Absorptionskern (25A) vorgesehen ist, der mit einer perforierten (27b) äußeren Wand (27B) versehen ist, welche vorzugsweise koaxial mit dem inneren Rohr (19) in dem Schalldämpfer ist, wobei ein innerer Teil (26B) aus Schallabsorptionsmaterial im Inneren des Absorptionskerns (25A) angeordnet ist (Fig. 5).

10. Schalldämpfer nach einem der Ansprüche 1 bis 9, dadurch gekennzeichnet, daß das Gehäuseteil (10) des Schalldämpfers im wesentlichen als ein rechtwinkeliges Prisma ausgeformt ist, und vier äußere Wände von gleicher Länge (L) in axialer Richtung und im wesentlichen gleicher Breite aufweist, von welchen äußeren Wänden zwei gegenüberliegende Wände zu öffnende Türwände sind, und daß das Gehäuseteil (10) ebene Enden (15a, 15b) hat, an denen Rohrverbinder (16a, 16b) befestigt sind, welche mit dem inneren Rohr ohne Stufen abschließen, und welche mit Flanschen (17a, 17b) versehen sind, um den Schalldämpfer an die Luftkanalrohre anzuschließen, so daß der Luftkanal, der vorzugsweise kreisförmig ist, sich durch den gesamten Schalldämpfer erstreckt, so daß seine äußere Wand im wesentlichen keine Stufen hat.

## Revendications

1. Amortisseur absorbant le son destiné à des conduits de climatisation, notamment dans les conduits d'air d'admission et/ou d'échappement dans l'industrie papetière, cet amortisseur sonore comprenant un caisson (10) à l'intérieur duquel est disposé un tube intérieur (19) muni de perforations traversantes (19a) ou équivalentes et définissant le conduit d'air (20) dans sa partie intérieure, et le matériau d'absorption sonore (21, 22) disposé autour du tube intérieur (19), grâce à quoi le son est absorbé dans la zone du conduit d'air (20), caractérisé en ce que pour le nettoyage de l'amortisseur sonore et du matériau d'absorption (22, 22, 26) et pour facilité le remplacement de ce dernier, le caisson (10) possède des parois latérales extérieures (11, 12, 13a, 13b, 14a, 14b, 13A, 13B), dont deux parois opposées (13a, 13b, 14a, 14b) ont été disposées sous forme de portes ouvrables à travers lesquelles le matériau d'absorption (21, 22, 26) peut être enlevé et remplacé depuis l'extérieur du tube intérieur (19).

2. Amortisseur sonore selon la revendication 1, caractérisé en ce que le caisson (10) est de forme rectangulaire et le tube intérieur (19) de forme circulaire dans le plan transversal perpendiculaire au passage du flux d'air, et en ce que les plans des parois extérieures de la partie caisson (10), y compris les parois extérieures ouvrables (13a, 13b ; 14a, 14b) sont parallèles au flux d'air.

3. Amortisseur sonore selon la revendication 1 ou 2, caractérisé en ce que la direction axiale du tube interne (19) de l'amortisseur sonore est verticale et en ce que le caisson (10) de l'amortisseur sonore est muni de parois latérales planes verticales (11, 12, 13a, 13b, 14a, 14b).

4. Amortisseur sonore selon l'une quelconque des revendications 1 à 3, caractérisé en ce que sur le pourtour du tube intérieur (19) perforé (19a) dans l'amortisseur sonore, il est prévu un anneau (21) en matériau d'absorption qui est réalisé à partir de laine minérale ou d'un matériau d'absorption équivalent et en ce qu'autour de cet anneau d'absorption (21) sont prévus des éléments (22) de matériau d'absorption qui peuvent être prélevés par les portes extérieures ouvrables (13a, 13b, 14a, 14b, 13A, 13B) du caisson.

5. Amortisseur sonore selon l'une quelconque des revendications 1 à 4, caractérisé en ce que le matériau d'absorption qui remplit le caisson (10) dans l'amortisseur sonore consiste en éléments (22) en matériau d'absorption dont le nombre est au moins de quatre éléments séparés qui présentent une face intérieure cylindrique et des faces extérieures planes, les faces planes étant placées en opposition aux faces internes des parois extérieures du caisson (10).

6. Amortisseur sonore selon la revendication 4 ou 5, caractérisé en ce que les éléments d'absorption (22) sont réalisés en plastique alvéolaire non mouillable et non compressible.

7. Amortisseur sonore selon l'une quelconque des revendications 1 à 6, caractérisé en ce que dans la partie intérieure du tube intérieur (19) dans l'amortisseur sonore, il est prévu une plaque ou des plaques (25, 25B) en matériau d'absorption dont le plan est de préférence parallèle au flux d'air, et en ce que ces plaques (25 ; 25B) en matériau d'absorption consistent en parois (27) en plaques perforées (27a) et en couches (26 ; 26A) de matériau d'absorption placées à l'intérieur des parois en plaques.

8. Amortisseur sonore selon la revendication 7, caractérisé en ce que pour leur nettoyage et/ou remplacement, les plaques d'absorption (25 ; 25B) peuvent être déplacées dans leurs éléments de guidage (24, 24a) à travers les parois extérieures ouvrables du caisson (10) vers l'extérieur du caisson (10) et de façon correspondante de nouveau sur leur position de fonctionnement.

9. Amortisseur sonore selon l'une quelconque des revendications 1 à 6, caractérisé en ce que dans la partie intérieure du tube intérieur (19) dans l'amortisseur sonore, il est prévu un noyau d'absorption (25A) qui est muni d'une paroi extérieure (27B) perforée (27b) qui est de préférence coaxiale avec le tube intérieur (19) dans l'amortisseur sonore, une partie intérieure (26B) du matériau amortisseur sonore étant placée dans la partie intérieure du noyau d'absorption (25A) (Figure 5).

10. Amortisseur sonore selon l'une quelconque des revendications 1 à 9, caractérisé en ce que la partie de caisson (10) de l'amortisseur sonore a sensiblement la forme d'un prisme rectangulaire et comprend quatre parois extérieures d'égale longueur (L) dans la direction axiale et sont de largeur sensiblement égale, parois extérieures dont deux parois opposées sont des parois à porte ouvrable, et en ce que la partie de caisson (10) comprend des extrémités planes (15a, 15b) sur lesquelles ont été fixés des raccords de tuyau (16a, 16b) qui raccordent le tube intérieur sans gradins et qui sont munis de brides (17a, 17b) pour la fixation de l'amortisseur sonore sur les tuyaux de conduits d'air de sorte que le conduit d'air qui est de préférence circulaire se prolonge sur la totalité de l'amortisseur sonore de sorte que sa paroi extérieure ne comporte sensiblement pas de gradins.
